# FASCICULE DE BREVET EUROPEEN

(11) **EP 3 424 377 B1**
(45) Date de publication et mention de la délivrance du brevet: **25.03.2020**
(21) Numéro de dépôt: 18181292.6
(22) Date de dépôt: 02.07.2018
(51) Int. Cl.: A47J 31/44, A47J 31/60

(54) **GESTION DU NETTOYAGE D'UNE BUSE VAPEUR POUR MACHINE A CAFE**
REINIGUNGSSTEUERUNG EINER DAMPFDÜSE FÜR KAFFEEMASCHINE
CLEANING MANAGEMENT OF THE STEAM NOZZLE FOR COFFEE MACHINE

(30) Priorité: 05.07.2017 FR 1756338
(43) Date de publication de la demande: 09.01.2019
(73) Titulaire: SEB S.A., 69130 Ecully (FR)
(72) Inventeur: EVRARD, Yoann, 53950 LOUVERNE (FR); BORDELET, Marylène, 72240 NEUVILLALAIS (FR); LE GOUEFF, Ronan, 53000 LAVAL (FR)
(74) Mandataire: Bourrières, Patrice

(56) Documents cités:
- EP-B1- 2 257 208

## Description

### Domaine technique

La présente invention concerne le domaine des machines à café, et porte plus particulièrement sur la gestion du nettoyage d'une buse vapeur pour une telle machine à café.

Un des objectifs de la présente invention est de proposer une solution pour optimiser la préparation successive de deux boissons lactées chaudes de type par exemple cappuccino ou latte comprenant chacune au moins un café et au moins un lait moussé, le tout en prévoyant le nettoyage de la buse vapeur ayant servi à la préparation des laits moussés.

### Etat de la technique

Une machine à café pour la préparation d'une boisson lactée chaude de type cappuccino ou latte comporte classiquement une buse de sortie de vapeur ou d'autres liquides tels que du lait.

Ces buses, appelées également buses vapeur, sont amenées à être plongées dans la boisson lors de la préparation de celle-ci ; la buse peut ainsi servir à faire mousser le lait pour la préparation du latte ou du cappuccino.

Le moussage d'un lait à l'aide de la buse vapeur entraînent cependant des traces de lait moussé ; ces traces ont tendance à sécher rapidement sur la paroi extérieure de la buse.

Ces buses vapeur nécessitent donc, après chaque préparation, un nettoyage de leur surface extérieure entrée en contact avec la boisson.

L'entretien de ces buses est contraignant, voire même fastidieux.

Traditionnellement, il faut utiliser un chiffon humide ou un récipient d'eau et du produit nettoyant pour nettoyer celle-ci après chaque préparation.

On comprend donc que la buse est le plus souvent laissée en l'état avec des traces ; on observera de plus que l'entretien de ces machines à café n'est pas fait de façon régulière car ce type de machine est souvent en libre-service.

Il existe déjà des solutions pour automatiser le plus possible le nettoyage d'une buse vapeur en limitant les interventions de l'utilisateur, tout en pouvant être intégrée à un coût raisonnable dans une machine pour la préparation de boissons, comme par exemple une machine expresso domestique.

On connaît notamment le document EP2265157 qui divulgue une solution pour le nettoyage d'une buse vapeur dans une machine à café automatique lors de la réalisation d'une boisson lactée, notamment un cappuccino ou un latte.

Dans ce document, la machine à café comprend un récipient de rinçage présentant une ouverture supérieure ; un dispositif de vidange apte à évacuer le liquide contenu dans le récipient ; un dispositif d'alimentation de la buse en liquide ; un dispositif de déplacement vertical de la buse pour que son extrémité libre pénètre dans le récipient ; et une unité de commande pour commander les dispositifs de déplacement et d'alimentation.

La machine divulguée dans ce document comprend une zone de préparation de boissons dans laquelle peut être placée une tasse. Le dispositif de déplacement déplace alors la buse entre les zones de préparation et de nettoyage.

La machine comprend en outre une sortie de produit de nettoyage mobile entre une position de distribution située dans la zone de nettoyage pour délivrer du produit dans le récipient et une position de rangement située en dehors de la zone de nettoyage.

La sortie de produit de nettoyage est reliée au dispositif de déplacement pour placer cette sortie dans la position de rangement lorsque la buse est dans la zone de nettoyage.

Le nettoyage de la buse proposé dans ce document prévoit donc une séquence de rinçage avec les étapes suivantes : un abaissement de la buse en position de rinçage dans le récipient ; un remplissage du récipient en liquide par la buse ; et une vidange du récipient déclenchée par l'unité de commande reliée aux dispositifs de déplacement et d'alimentation.

Cette solution est satisfaisante pour l'utilisateur lors de la préparation d'une seule boisson lactée.

Le demandeur observe cependant qu'avec la solution proposée dans ce document, le nettoyage de la buse vapeur est contraignant lors de la préparation successive de deux cappuccino ou deux latte ; en effet, idéalement, il est préférable de nettoyer la buse vapeur entre chaque préparation.

La gestion du nettoyage de la buse vapeur selon ce document n'est pas optimale lors de la préparation successive de deux boissons lactées chaudes car le temps de rinçage de la buse entre les deux préparations est très long, ce qui n'est pas acceptable pour l'utilisateur.

Une autre solution pour le nettoyage d'une buse vapeur est décrite dans le document EP-B-2257808.

### Résumé de l'invention

Un des objectifs de la présente invention est de remédier aux différents inconvénients mentionnés ci-dessus en proposant une solution de gestion du nettoyage d'une buse vapeur pour machine à café lors de la préparation successive d'une première et d'une deuxième boisson chaude comprenant chacune au moins un café et un lait moussé.

A cet effet, l'objet de la présente invention concerne, selon un premier aspect, un procédé de gestion du nettoyage d'une buse vapeur pour machine à café apte à préparer successivement une première et une deuxième boisson chaude comprenant chacune au moins un café et un lait moussé.

Selon la présente invention, le procédé comprend la fourniture d'une machine à café comportant :
a) une buse vapeur mobile présentant une extrémité libre ;
b) un récipient de rinçage rempli au moins partiellement d'un liquide de rinçage et présentant une ouverture supérieure apte à recevoir l'extrémité libre de ladite buse ;
c) des moyens de déplacement configurés pour déplacer verticalement la buse afin que l'extrémité libre pénètre par l'ouverture supérieure dans le récipient de rinçage ; et
d) des moyens de préparation configurés pour préparer au moins un café.

Selon l'invention, le procédé est mis en œuvre par une unité de commande électronique d'au moins les moyens de déplacement et les moyens de préparation, et comprend :
- une première étape de moussage du lait de la première boisson à l'aide de la buse vapeur ;
- une première séquence de rinçage présentant, suite à la première étape de moussage, une première étape de trempage déclenchée électroniquement par l'unité de commande et consistant à pénétrer l'extrémité libre de la buse dans le récipient de rinçage par l'ouverture supérieure afin de plonger la buse dans le liquide de rinçage ; et
- une première étape de préparation du café de la première boisson déclenchée électroniquement par l'unité de commande.

Selon l'invention, la première étape de préparation du café est réalisée en temps masqué avec la première étape de trempage de la buse.

Le fait de réaliser cette première étape de préparation du café pour la première boisson en temps masqué avec la première étape de trempage de la buse permet de gagner environ trente secondes sur le cycle complet, ce qui améliore significativement l'expérience de l'utilisateur.

Avantageusement, la première séquence de rinçage comprend, préalablement à la première étape de moussage, une première étape de remplissage du récipient en liquide de rinçage à l'aide de la buse vapeur.

On prévoit ici dans le cadre de la présente invention des moyens d'alimentation aptes à alimenter la buse en liquide de rinçage. Ces moyens sont commandés électroniquement par l'unité de commande.

De préférence, la première étape de remplissage du récipient comprend préalablement un abaissement de la buse en position de rinçage dans le récipient.

Avantageusement, le procédé selon la présente invention comprend une étape de préchauffage de l'eau déclenchée électroniquement par l'unité de commande pour la préparation de ladite première boisson.

Dans un mode de réalisation préféré, l'étape de préchauffage est réalisée en temps masqué avec l'étape de remplissage du récipient en liquide de rinçage. Ceci permet de réduire davantage le cycle de préparation des deux boissons chaudes.

Avantageusement, la première séquence de rinçage comprend une étape d'agitation de la buse. Au cours de cette étape, l'extrémité libre de la buse est déplacée alternativement de haut en bas dans le récipient de rinçage. On prévoit de préférence que la buse délivre de la vapeur dans le récipient de rinçage pendant cette étape d'agitation.

Avantageusement, le procédé selon la présente invention comprend une deuxième étape de moussage du lait de la deuxième boisson à l'aide de la buse. De préférence, cette deuxième étape de moussage du lait de la deuxième boisson est suivie d'une deuxième étape de préparation du café de la deuxième boisson.

Dans un mode de réalisation préféré, la première séquence de rinçage comprend une première étape de vidange du récipient de rinçage déclenchée électroniquement par l'unité de commande pour être réalisée en temps masqué avec la deuxième étape de moussage du lait et/ou la deuxième étape de préparation du café de la deuxième boisson. Ceci permet de réduire davantage le cycle de préparation des deux boissons chaudes successives.

On prévoit donc dans le cadre de la présente invention des moyens de vidange pour le récipient aptes à être commandés électroniquement par l'unité de commande. Ceci permet de répéter la séquence de rinçage sans intervention de l'utilisateur.

Avantageusement, le procédé selon la présente invention comprend une deuxième séquence de rinçage de la buse suite à la première étape de vidange du récipient.

De préférence, cette deuxième séquence de rinçage comprend une deuxième étape de remplissage du récipient en liquide de rinçage à l'aide de la buse vapeur, et une deuxième étape de trempage de la buse vapeur dans le liquide de rinçage.

Optionnellement, la deuxième séquence de rinçage comprend en outre une deuxième étape de vidange suite à la deuxième étape de trempage.

Ainsi, au cours d'une même séquence de rinçage, les étapes d'abaissement, de remplissage et de vidange sont réalisées de manière automatique par l'unité de commande électronique et les dispositifs d'alimentation et de déplacement de la buse vapeur.

L'intervention de l'utilisateur au cours d'une séquence de rinçage n'est pas nécessaire, si ce n'est éventuellement pour le déplacement de la buse vapeur d'une zone de préparation de boissons vers la zone de nettoyage. Avantageusement, le procédé selon la présente invention comprend l'actionnement préalable sur une interface utilisateur de la machine d'une touche d'activation dédiée pour la préparation successive d'une première et d'une deuxième boisson comprenant chacune un café et un lait moussé. Cette unique touche accessible sur l'interface de la machine permet à l'utilisateur d'obtenir par un simple actionnement la préparation de deux boissons chaudes comprenant chacune au moins un café et un lait moussé. On comprendra ici que cette unique touche permet d'activer l'unité de commande de manière à mettre en œuvre un algorithme de gestion pour la préparation des deux boissons.

L'objet de la présente invention concerne, selon un deuxième aspect, une machine à café, dite automatique, pour la préparation successive d'une première et d'une deuxième boisson chaude comprenant chacune au moins un café et un lait moussé.

La machine comprend différents moyens techniques configurés pour la mise en œuvre des étapes du procédé tel que décrit ci-dessus. Plus particulièrement, la machine à café selon la présente invention comporte :
a) une buse vapeur mobile présentant une extrémité libre ;
b) un récipient de rinçage rempli au moins partiellement d'un liquide de rinçage et présentant une ouverture supérieure apte à recevoir l'extrémité libre de la buse ;
c) des moyens de déplacement configurés pour déplacer verticalement la buse afin que l'extrémité libre pénètre par l'ouverture supérieure dans le récipient de rinçage ;
d) des moyens de préparation configurés pour préparer au moins un café ;
e) une unité de commande électronique mettant en œuvre un algorithme de gestion configuré pour commander au moins les moyens de déplacement et les moyens de préparation.

Selon la présente invention, l'algorithme de gestion est configuré de manière à déclencher électroniquement :
- suite au moussage du lait de la première boisson à l'aide de la buse vapeur, une première séquence de rinçage présentant un premier trempage au cours duquel l'extrémité libre de la buse pénètre dans le récipient de rinçage par l'ouverture supérieure afin de plonger la buse dans le liquide de rinçage ; et
- une préparation du café de la première boisson.

Selon la présente invention, l'algorithme de gestion est configuré pour que la préparation du café soit réalisée en temps masqué avec le premier trempage de ladite buse.

Ainsi, grâce aux différentes caractéristiques structurelles et fonctionnelles décrites ci-dessus, la présente invention permet de remédier aux inconvénients de l'état de la technique en proposant une gestion du nettoyage de la buse vapeur qui vise à optimiser le cycle de préparation d'au moins deux boissons successives à base de café et de lait moussé.

### Brève description des figures

Les caractéristiques et avantages de l'invention apparaîtront à la lecture de la description suivante s'appuyant sur des figures, parmi lesquelles :
- la figure 1 représente un organigramme représentant les différentes étapes du procédé de gestion du nettoyage de la buse selon un exemple de réalisation de la présente invention ;
- la figure 2 représente une vue schématique de la façade d'une machine à café selon un exemple de réalisation de la présente invention ;
- la figure 3 représente une vue schématique du système de nettoyage intégré dans la machine à café.

### Description détaillée

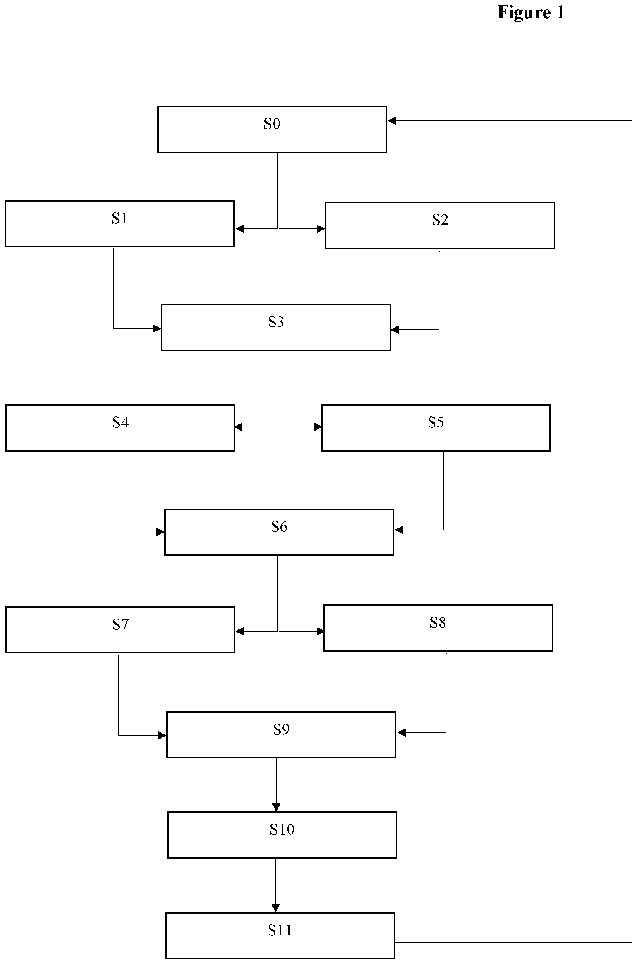

Le procédé de gestion du nettoyage d'une buse vapeur ainsi qu'une machine à café mettant en œuvre un tel procédé vont maintenant être décrits dans ce qui va suivre en référence conjointement aux figures 1 à 3.

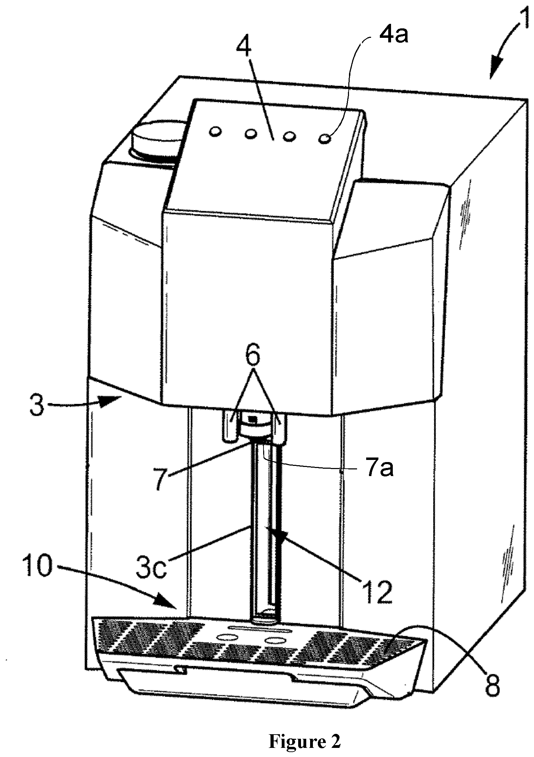

Dans l'exemple décrit ici et illustré en figure 2, on dispose d'une machine à café 1 pour la préparation de boissons, et plus particulièrement d'une machine à café de type expresso à usage domestique.

Une telle machine peut être installée facilement par un simple branchement sur une prise électrique, mais sans raccordement à une conduite d'eau ou une conduite d'évacuation.

La machine à café 1 décrite ici présente en façade 3 avant un panneau de commande 4 muni de boutons reliés à une unité de commande électronique (non représentés ici). Cette unité de commande permet de commander de manière la plus automatisée possible le fonctionnement de la machine à café 1.

Dans l'exemple décrit ici, il est ainsi prévu un bouton d'activation 4a d'un mode dit «double cappuccino» pour la préparation de deux boissons successives de type cappuccino ou latte comprenant chacune au moins un café et un lait moussé.

Dans l'exemple décrit ici et illustré en figure 2, on distingue sous la partie de la façade 3 deux sorties 6 de boisson, ici du café. Ces sorties 6 sont mobiles verticalement pour s'adapter à la hauteur de la tasse. On notera cependant que cela n'est pas indispensable et une seule sortie pourrait être prévue. De manière bien connue, la machine à café 1 comporte un groupe d'infusion permettant de délivrer, de préférence de manière automatique, du café par les sorties 6 à partir de réserves internes de café ou de mouture et d'eau.

Sous la partie proéminente de la façade 3 et en arrière des sorties 6, est également agencée une buse vapeur mobile 7.

Dans l'exemple décrit ici, la machine à café 1 comporte un générateur de vapeur capable de délivrer de la vapeur à la buse vapeur 7, mais aussi de l'eau chaude sous faible pression. Ce dispositif d'alimentation en vapeur et en eau de la buse vapeur 7 peut être formé par tous moyens connus, et notamment une chaudière. L'alimentation en eau ou en vapeur est réalisée à l'aide d'électrovannes commandées par l'unité de commande électronique.

La machine à café 1 présente une zone de préparation 10 définie par l'espace s'étendant au-dessus du plateau repose-tasses 8 jusqu'aux sorties 6 du café et à la buse vapeur 7 en position haute, et plus généralement jusqu'au-dessous de la partie supérieure proéminente de la façade 3. Cette zone de préparation est délimitée vers l'arrière par la partie inférieure de la façade qui est faiblement incurvée. Toutefois, la zone de préparation pourrait se présenter sous forme d'une niche délimitée latéralement sur trois côtés par la façade.

La buse vapeur 7 est mobile verticalement dans la zone de préparation grâce à des moyens de déplacement 13 de la buse vapeur 7.

La mobilité verticale de la buse vapeur 7 est déterminée pour que l'extrémité libre 7a de celle-ci puisse descendre dans une tasse placée sous les sorties 6. Il est alors possible de délivrer la vapeur par l'extrémité libre 7a de la buse pour réchauffer la boisson, et éventuellement émulsionner celle-ci en entraînant de l'air avec la vapeur. Il est également envisageable dans l'exemple décrit ici de placer la buse vapeur 7 dans une position supérieure pour délivrer un produit, par exemple de la mousse de lait sur un café, par exemple à l'aide d'un accessoire créant à l'aide de la vapeur une émission air/lait à l'extrémité 7a de la buse vapeur 7.

Afin de nettoyer la buse vapeur 7 après qu'elle ait trempé dans une boisson comme un expresso, un latte macchiato, un cappuccino ou un chocolat chaud, la machine à café 1 comprend un système de nettoyage 11 dont les principaux composants sont essentiellement un récipient de rinçage 12, les moyens de déplacement 13 et des moyens de délivrance de produit de nettoyage 15.

Ces moyens 12, 13 et 15 sont décrits de façon détaillée selon un exemple de réalisation dans le document EP2265157. La présente invention ne porte donc pas sur ces moyens en tant que tels.

On notera cependant ici que, de façon avantageuse, les moyens 12, 13 et 15 sont commandés électroniquement par l'unité de commande selon un algorithme de gestion mis en œuvre après actionnement du bouton «double cappuccino», référencé ici 4a.

Dans l'exemple décrit ici, le récipient de rinçage 12 présente une ouverture supérieure apte à recevoir l'extrémité libre 7a de la buse vapeur 7. Le récipient de rinçage 12 comporte également des moyens de vidange qui permettent une évacuation quasi complète du liquide contenu dans le récipient 12. Le déclenchement de la vidange du récipient 12 est effectué à la suite d'une commande, ou d'une série de commandes de l'unité de commande électronique.

Dans l'exemple décrit ici, les moyens de vidange peuvent être par exemple une conduite formant un siphon, ladite conduite présentant une entrée située à l'intérieur du récipient de rinçage 12 et à proximité du fond de celui-ci, un coude situé à proximité de l'ouverture supérieure du récipient et à un niveau correspondant à un maximum de liquide contenu dans le récipient, et une sortie située sous le niveau de l'entrée.

Pour permettre le nettoyage de la buse vapeur 7 par introduction de celle-ci à travers l'ouverture supérieure, le récipient 12 est agencé dans une position bien précise par rapport au boîtier de la machine à café 1. Pour cela, la façade, et plus particulièrement la partie inférieure de celle-ci comporte un logement en creux 3c. Le logement creux 3c s'étend verticalement sur toute la hauteur de la partie inférieure de la façade de sorte qu'il forme une ouverture frontale dans cette façade.

Dans cet exemple, le récipient 12 est avantageusement monté de manière amovible dans le logement 3c, par exemple pour nettoyer les quelques dépôts qui peuvent s'accumuler dans celui-ci.

Dans l'exemple décrit ici, les moyens de déplacement 13 permettent donc de déplacer verticalement la buse vapeur 7 dans la zone de préparation 10 de boissons pour que celle-ci plonge dans une tasse.

On notera aussi que, comme décrit dans le document EP2265157, ces moyens de déplacement 13 permettent également le déplacement de la buse vapeur 7 dans le plan horizontal de la zone de préparation 10 de boissons vers la zone de nettoyage définie par le logement 3c.

Une fois dans la zone de nettoyage, la buse est située en regard de l'ouverture du récipient 12, et un déplacement vertical de celle-ci, tout à fait analogue à celui effectué dans la zone de nettoyage, peut être commandé par l'unité de commande électronique. Néanmoins, il est possible de prévoir pour des raisons de coût que certains de ces déplacements, et notamment le déplacement horizontal, soient effectués manuellement.

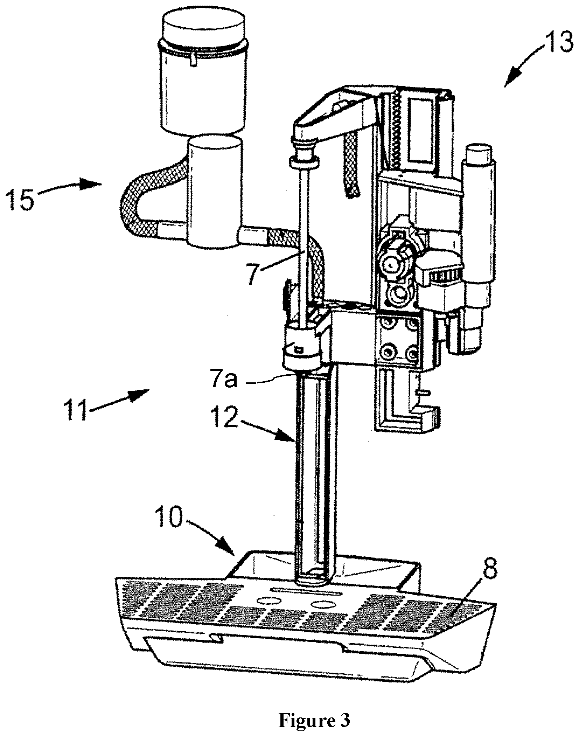

Les caractéristiques structurelles de la machine à café 1, et notamment des moyens 12, 13 et 15 tels qu'illustrés en figure 2 et 3, ne font pas partie de l'objet de la protection recherchée ici et sont décrits en détails dans le document EP2265157.

Pour mémoire, la présente invention vise à optimiser le cycle de préparation de deux boissons successives de type cappuccino ou latte comprenant chacune au moins un café et un lait moussé.

Plus particulièrement, un des objectifs de la présente invention est de proposer une gestion du nettoyage de la buse ayant servi à la préparation des laits moussés pour ces deux boissons.

Comme indiqué précédemment, il est prévu dans le cadre de la présente invention que l'actionnement S0 du bouton 4a pour un « double cappuccino » active l'unité de commande pour débuter le cycle de préparation successive de ces deux boissons. Suite à cette activation, l'unité de commande met en œuvre un algorithme de gestion.

L'unité de commande et l'algorithme de gestion mis en œuvre par cette unité sont caractéristiques de la présente invention. L'algorithme de gestion est en effet configuré pour optimiser le cycle de préparation de ces deux boissons successives de manière à ce que le temps de préparation soit acceptable par l'utilisateur tout en assurant le nettoyage de la buse entre la préparation des deux boissons, un tel nettoyage intermédiaire garantit dans le temps le bon entretien et la longévité de la machine à café 1.

Dans l'exemple décrit ici, après actionnement du bouton 4a, l'unité de commande déclenche les moyens de chauffage pour le préchauffage S1 de l'eau et de la vapeur d'eau en vue de la préparation de la première boisson.

Après actionnement, l'unité de commande déclenche également les moyens de déplacement 13 pour l'abaissement de la buse en position de rinçage dans le récipient 12.

Une fois abaissée en position de rinçage, l'unité de commande déclenche le remplissage S2 du récipient 12 en liquide de rinçage. Dans l'exemple décrit ici, le remplissage S2 du récipient 12 est effectué de manière à atteindre un niveau prédéterminé de liquide situé sous le niveau maximum du récipient.

Dans l'exemple décrit ici et comme illustré en figure 1, afin d'optimiser le cycle de préparation des deux boissons, l'unité de commande déclenche le remplissage S2 du récipient de manière à ce que celui-ci soit réalisé en temps masqué avec le remplissage S2 du récipient 12 en liquide de rinçage.

Quand l'eau est chaude, l'unité de commande déclenche le moussage S3 de lait pour la première boisson à l'aide la buse vapeur 7.

Celle-ci est souillée par le lait moussé. Un rinçage de la buse vapeur 7, et notamment de sa surface extérieure entrée en contact avec le lait moussé, est donc requis.

Dans l'exemple décrit ici, l'unité de commande déclenche alors une étape de trempage S5 mise en œuvre par les moyens de déplacement 13. Lors de cette étape S5, les moyens de déplacement 13 déplacent la buse vapeur 7 de manière à ce que l'extrémité libre 7a de la buse vapeur 7 pénètre dans le récipient de rinçage 12 par l'ouverture supérieure et plonge dans le liquide de rinçage.

Dans l'exemple décrit ici et comme illustré en figure 1, afin d'optimiser le cycle de préparation des deux boissons, l'unité de commande déclenche dans le même temps l'étape de préparation S4 du café de la première boisson. En d'autres termes, l'étape de préparation S4 du café de la première boisson est réalisée en temps masqué avec la première étape de trempage S5 de la buse vapeur 7.

Suite à cette préparation S4, l'unité de commande déclenche l'étape de moussage S6 du lait de la deuxième boisson suivie d'une étape de préparation S7 du café de la deuxième boisson.

A l'issue du moussage du lait de la deuxième boisson, il est requis là encore de nettoyer la buse vapeur 7.

L'unité de commande déclenche alors la deuxième séquence de rinçage de la buse.

Cette deuxième séquence nécessite au préalable de finaliser la première séquence de rinçage par la vidange S8 du récipient 12.

Dans l'exemple décrit ici et comme illustré en figure 1, afin d'optimiser le cycle de préparation des deux boissons, cette première vidange S8 est déclenchée par l'unité de commande qui pilote électroniquement les moyens de vidange (non représentés ici). De préférence, l'algorithme de gestion comprend des instructions permettant une vidange S8 réalisée en temps masqué avec la préparation S7 du café de la deuxième boisson.

Une fois la vidange S8 réalisée, la deuxième séquence de rinçage peut être opérée. L'unité de commande déclenche alors l'abaissement de la buse vapeur 7 par les moyens de déplacement 13 suivi du remplissage S9 du récipient en liquide de rinçage par la buse vapeur 7 en position de rinçage.

Dans cet exemple, une fois que le récipient 12 est rempli, l'extrémité libre 7a de la buse vapeur 7 est plongée dans le liquide de rinçage pour réaliser le deuxième trempage S10 en tant que tel.

Une fois trempée et nettoyée, les moyens de déplacement 13 pilotés électroniquement par l'unité de commande ressortent la buse vapeur 7 du récipient 12 puis les moyens de vidange réalisent la deuxième vidange S11.

Cette deuxième vidange met fin au cycle de préparation des deux boissons. La machine à café 1 retourne alors à son état « prêt » pour lancer une nouvelle préparation.

En réalisant certaines étapes en temps masqué les unes par rapport aux autres, le procédé présenté dans le cadre de la présente invention permet d'optimiser le cycle de préparation successive de deux boissons lactées chaudes tout en assurant le nettoyage de la buse entre chaque boisson.

Il devra être observé que cette description détaillée porte sur un exemple de réalisation particulier de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

Il apparaîtra clairement que la buse vapeur 7 n'est pas impérativement une buse vapeur au sens où on l'entend pour une machine à café expresso, mais qu'il peut s'agir d'une buse délivrant en plus du lait, voire une boisson toute prête.

Il devra également être observé que les signes de références mis entre parenthèses dans les revendications qui suivent ne présentent en aucun cas un caractère limitatif ; ces signes ont pour seul but d'améliorer l'intelligibilité et la compréhension des revendications qui suivent ainsi que la portée de la protection recherchée.

## Revendications

1. Procédé de gestion du nettoyage d'une buse vapeur (7) pour machine à café (1) apte à préparer successivement une première et une deuxième boisson chaude comprenant chacune au moins un café et un lait moussé, ledit procédé comprenant la fourniture d'une machine à café (1) comportant :
a) une buse vapeur (7) mobile présentant une extrémité libre (7a) ;
b) un récipient de rinçage (12) rempli au moins partiellement d'un liquide de rinçage et présentant une ouverture supérieure apte à recevoir l'extrémité libre (7a) de ladite buse vapeur (7) ;
c) des moyens de déplacement (13) configurés pour déplacer verticalement ladite buse vapeur (7) afin que l'extrémité libre (7a) pénètre par ladite ouverture supérieure dans le récipient de rinçage (12) ; et
d) des moyens de préparation configurés pour préparer au moins un café ;
ledit procédé, mis en œuvre par une unité de commande électronique d'au moins lesdits moyens de déplacement (13) et lesdits moyens de préparation, comprenant :
- une première étape de moussage (S3) du lait de la première boisson à l'aide de ladite buse vapeur (7) ;
- une première séquence de rinçage (S2, S5, S8) présentant, suite à la première étape de moussage (S3), une première étape de trempage (S5) déclenchée électroniquement par ladite unité de commande et consistant à pénétrer l'extrémité libre (7a) de ladite buse vapeur (7) dans ledit récipient de rinçage (12) par ladite ouverture supérieure afin de plonger ladite buse vapeur (7) dans le liquide de rinçage ; et
- une première étape de préparation (S4) du café de la première boisson déclenchée électroniquement par ladite unité de commande,
ladite première étape de préparation (S4) dudit café étant réalisée en temps masqué avec la première étape de trempage (S5) de ladite buse vapeur (7).

2. Procédé selon la revendication 1, dans lequel la première séquence de rinçage (S2, S5, S8) comprend, préalablement à la première étape de moussage (S3), une première étape de remplissage (S2) du récipient en liquide de rinçage à l'aide de ladite buse vapeur (7).

3. Procédé selon la revendication 2, dans lequel la première étape de remplissage (S2) du récipient (12) comprend préalablement un abaissement de la buse en position de rinçage dans le récipient (12).

4. Procédé selon la revendication 2 ou 3, lequel comprend une étape de préchauffage (S1) de l'eau déclenchée électroniquement par ladite unité de commande pour la préparation de ladite première boisson et réalisée en temps masqué avec l'étape de remplissage (S2) du récipient (12) en liquide de rinçage.

5. Procédé selon l'une quelconque des revendications précédentes, dans lequel la première séquence de rinçage (S2, S5, S8) comprend une étape d'agitation de ladite buse vapeur (7) au cours de laquelle l'extrémité libre (7a) de la buse vapeur (7) est déplacée alternativement de haut en bas dans le récipient de rinçage (12).

6. Procédé selon l'une quelconque des revendications précédentes, lequel comprend une deuxième étape de moussage (S6) du lait de la deuxième boisson à l'aide de ladite buse vapeur (7).

7. Procédé selon la revendication 6, dans lequel ladite deuxième étape de moussage (S6) du lait de la deuxième boisson est suivie d'une deuxième étape de préparation du café (S7) de la deuxième boisson.

8. Procédé selon la revendication 7, dans lequel la première séquence de rinçage (S2, S5, S8) comprend une première étape de vidange (S8) du récipient de rinçage (12) déclenchée électroniquement par ladite unité de commande pour être réalisée en temps masqué avec la deuxième étape de moussage (S6) du lait et/ou la deuxième étape de préparation (S7) du café de la deuxième boisson.

9. Procédé selon la revendication 8, lequel comprend une deuxième séquence de rinçage (S9, S10, S11) de ladite buse vapeur (7) suite à la première étape de vidange (S8) dudit récipient (12), ladite deuxième séquence de rinçage (S9, S10, S11) comprenant :
- une deuxième étape de remplissage (S9) du récipient (12) en liquide de rinçage à l'aide de ladite buse vapeur (7), et
- une deuxième étape de trempage (S10) de ladite buse vapeur (7) dans le liquide de rinçage.

10. Procédé selon la revendication 9, dans lequel la deuxième séquence de rinçage (S9, S10, S11) comprend une deuxième étape de vidange (S11) suite à la deuxième étape de trempage (S10).

11. Procédé selon l'une quelconque des revendications précédentes, lequel comprend l'actionnement (S0) préalable sur un interface utilisateur (4) de ladite machine à café (1) d'une touche d'activation (4a) dédiée pour la préparation successive d'une première et d'une deuxième boisson comprenant chacune un café et un lait moussé.

12. Machine à café (1) pour la préparation successive d'une première et d'une deuxième boisson chaude comprenant chacune au moins un café et un lait moussé, ladite machine à café (1) comportant :
a) une buse vapeur (7) mobile présentant une extrémité libre (7a) ;
b) un récipient de rinçage (12) rempli au moins partiellement d'un liquide de rinçage et présentant une ouverture supérieure apte à recevoir l'extrémité libre (7a) de ladite buse vapeur (7) ;
c) des moyens de déplacement (13) configurés pour déplacer verticalement ladite buse vapeur (7) afin que l'extrémité libre (7a) pénètre par ladite ouverture supérieure dans le récipient de rinçage (12) ;
d) des moyens de préparation configurés pour préparer au moins un café, et
e) une unité de commande électronique mettant en œuvre un algorithme de gestion configuré pour commander au moins lesdits moyens de déplacement (13) et lesdits moyens de préparation de manière à déclencher électroniquement :
- suite au moussage du lait de la première boisson à l'aide de ladite buse vapeur (7), une première séquence de rinçage présentant un premier trempage au cours duquel l'extrémité libre (7a) de ladite buse vapeur (7) pénètre dans ledit récipient de rinçage (12) par ladite ouverture supérieure afin de plonger ladite buse vapeur (7) dans le liquide de rinçage ; et
- une préparation du café de la première boisson,
ledit algorithme de gestion étant configuré pour que ladite préparation dudit café soit réalisée en temps masqué avec le premier trempage de ladite buse vapeur (7).

## Patentansprüche

1. Verfahren zum Betreiben der Reinigung einer Dampfdüse (7) für eine Kaffeemaschine (1), die dazu geeignet ist, nacheinander ein erstes und ein zweites Heißgetränk zuzubereiten, das jeweils mindestens einen Kaffee und einen Milchschaum umfasst, wobei das Verfahren die Bereitstellung einer Kaffeemaschine (1) umfasst, die Folgendes aufweist:
a) eine bewegliche Dampfdüse (7), die ein freies Ende (7a) aufweist;
b) einen Spülbehälter (12), der zumindest teilweise mit einer Spülflüssigkeit gefüllt ist und eine obere Öffnung aufweist, die zur Aufnahme des freien Endes (7a) der Dampfdüse (7) geeignet ist;
c) Verschiebungsmittel (13), die dazu konfiguriert sind, die Dampfdüse (7) vertikal zu verschieben, sodass das freie Ende (7a) durch die obere Öffnung in den Spülbehälter (12) eindringt; und
d) Zubereitungsmittel, die dazu konfiguriert sind, mindestens einen Kaffee zuzubereiten;
wobei das Verfahren, das von einer elektronischen Steuereinheit zumindest der Verschiebungsmittel (13) und der Zubereitungsmittel durchgeführt wird,
Folgendes umfasst:
- einen ersten Aufschäumschritt (S3) der Milch des ersten Getränks mittels der Dampfdüse (7);
- eine erste Spülsequenz (S2, S5, S8), die nach dem ersten Aufschäumschritt (S3) einen ersten Befeuchtungsschritt (S5) aufweist, der von der Steuereinheit elektronisch ausgelöst wird und aus dem Eindringen des freien Endes (7a) der Dampfdüse (7) in den Spülbehälter (12) durch die obere Öffnung besteht, um die Dampfdüse (7) in die Spülflüssigkeit zu tauchen; und
- einen ersten Schritt (S4) der Zubereitung des Kaffees des ersten Getränks, der von der Steuereinheit elektronisch ausgelöst wird,
wobei der erste Schritt (S4) der Zubereitung des Kaffees hauptzeitparallel mit dem ersten Befeuchtungsschritt (S5) der Dampfdüse (7) erfolgt.

2. Verfahren nach Anspruch 1, wobei die erste Spülsequenz (S2, S5, S8) vor dem ersten Aufschäumschritt (S3) einen ersten Schritt (S2) des Füllens des Behälters mit Spülflüssigkeit mittels der Dampfdüse (7) umfasst.

3. Verfahren nach Anspruch 2, wobei der erste Schritt (S2) des Füllens des Behälters (12) vorher ein Absenken der Düse in die Spülstellung im Behälter (12) umfasst.

4. Verfahren nach Anspruch 2 oder 3, umfassend einen von der Steuereinheit elektronisch ausgelösten Schritt (S1) des Vorwärmens von Wasser zur Zubereitung des ersten Getränks und der hauptzeitparallel mit dem Schritt (S2) des Füllens des Behälters (12) mit Spülflüssigkeit erfolgt.

5. Verfahren nach einem der vorstehenden Ansprüche, wobei die erste Spülsequenz (S2, S5, S8) einen Schritt des Rührens der Dampfdüse (7) umfasst, während das freie Ende (7a) der Dampfdüse (7) im Spülbehälter (12) abwechselnd auf und ab verschoben wird.

6. Verfahren nach einem der vorstehenden Ansprüche, umfassend einen zweiten Aufschäumschritt (S6) der Milch des zweiten Getränks mittels der Dampfdüse (7).

7. Verfahren nach Anspruch 6, wobei dem zweiten Aufschäumschritt (S6) der Milch des zweiten Getränks ein zweiter Schritt (S7) der Zubereitung des Kaffees des zweiten Getränks folgt.

8. Verfahren nach Anspruch 7, wobei die erste Spülsequenz (S2, S5, S8) einen von der Steuereinheit elektronisch ausgelösten ersten Entleerungsschritt (S8) des Spülbehälters (12) zur hauptzeitparallelen Durchführung mit dem zweiten Milchaufschäumschritt (S6) und/oder dem zweiten Schritt (S7) der Zubereitung des Kaffees des zweiten Getränks umfasst.

9. Verfahren nach Anspruch 8, umfassend eine zweite Spülsequenz (S9, S10, S11) der Dampfdüse (7) nach dem ersten Entleerungsschritt (S8) des Behälters (12), wobei die zweite Spülsequenz (S9, S10, S11) Folgendes umfasst:
- einen zweiten Schritt (S9) des Füllens des Behälters (12) mit Spülflüssigkeit mittels der Dampfdüse (7) und
- einen zweiten Befeuchtungsschritt (S10) der Dampfdüse (7) in der Spülflüssigkeit.

10. Verfahren nach Anspruch 9, wobei die zweite Spülsequenz (S9, S10, S11) einen zweiten Entleerungsschritt (S11) nach dem zweiten Befeuchtungsschritt (S10) umfasst.

11. Verfahren nach einem der vorstehenden Ansprüche, umfassend die vorherige Betätigung (S0) einer zur aufeinanderfolgenden Zubereitung eines ersten und eines zweiten Getränks, die jeweils einen Kaffee und einen Milchschaum umfassen, vorgesehenen Aktivierungstaste (4a) auf einer Benutzerschnittstelle (4) der Kaffeemaschine (1).

12. Kaffeemaschine (1) zur aufeinanderfolgenden Zubereitung eines ersten und eines zweiten Heißgetränks, die jeweils mindestens einen Kaffee und einen Milchschaum umfassen, wobei die Kaffeemaschine (1) Folgendes aufweist:
a) eine bewegliche Dampfdüse (7), die ein freies Ende (7a) aufweist;
b) einen Spülbehälter (12), der zumindest teilweise mit einer Spülflüssigkeit gefüllt ist und eine obere Öffnung aufweist, die zur Aufnahme des freien Endes (7a) der Dampfdüse (7) geeignet ist;
c) Verschiebungsmittel (13), die dazu konfiguriert sind, die Dampfdüse (7) vertikal zu verschieben, sodass das freie Ende (7a) durch die obere Öffnung in den Spülbehälter (12) eindringt;
d) Zubereitungsmittel, die dazu konfiguriert sind, mindestens einen Kaffee zuzubereiten, und
e) eine elektronische Steuereinheit, die einen Betriebsalgorithmus ausführt, der so konfiguriert ist, dass er zumindest die Verschiebungsmittel (13) und die Zubereitungsmittel so steuert, dass Folgendes elektronisch ausgelöst wird:
- nach dem Aufschäumen der Milch des ersten Getränks mittels der Dampfdüse (7) eine erste Spülsequenz, die ein erstes Befeuchten aufweist, bei dem das freie Ende (7a) der Dampfdüse (7) durch die obere Öffnung in den Spülbehälter (12) eindringt, um die Dampfdüse (7) in die Spülflüssigkeit zu tauchen; und
- eine Zubereitung des Kaffees des ersten Getränks,
wobei der Betriebsalgorithmus so konfiguriert ist, dass die Zubereitung des Kaffees hauptzeitparallel mit dem ersten Befeuchten der Dampfdüse (7) erfolgt.

## Claims

1. Method for the management of the cleaning of a steam nozzle (7) for a coffee machine (1) able to successively prepare a first and a second hot beverage each comprising at least one coffee and a frothy milk, said method comprising the provision of a coffee machine (1) including:
a) a mobile steam nozzle (7) having a free end (7a);
b) a rinsing recipient (12) filled at least partially with a rinsing liquid and having an upper opening able to receive the free end (7a) of said steam nozzle (7);
c) means of displacement (13) configured to vertically displace said steam nozzle (7) so that the free end (7a) penetrates through said upper opening into the rinsing recipient (12); and
d) means of preparation configured to prepare at least one coffee; said method, implemented by an electronic control unit of at least said means of displacement (13) and said means of preparation, comprising:
- a first step of frothing (S3) milk of the first beverage using said steam nozzle (7);
- a first rinsing sequence (S2, S5, S8) that has, following the first step of frothing (S3), a first step of soaking (S5) triggered electronically by said control unit and consisting in penetrating the free end (7a) of said steam nozzle (7) into said rinsing recipient (12) through said upper opening in order to plunge said steam nozzle (7) into the rinsing liquid; and
- a first step of preparing (S4) the coffee of the first beverage triggered electronically by said control unit,
said first step of preparing (S4) said coffee being carried out in masked time with the first step of soaking (S5) of said steam nozzle (7).

2. Method according to claim 1, wherein the first rinsing sequence (S2, S5, S8) comprises, prior to the first step of frothing (S3), a first step of filling (S2) the recipient with rinsing liquid using said steam nozzle (7).

3. Method according to claim 2, wherein the first step of filling (S2) the recipient (12) comprises beforehand a lowering of the nozzle into the rinsing position in the recipient (12).

4. Method according to claim 2 or 3, which comprises a step of preheating (S1) water triggered electronically by said control unit for the preparation of said first beverage and carried out in masked time with the step of filling (S2) the recipient (12) with rinsing liquid.

5. Method according to any preceding claim, wherein the first rinsing sequence (S2, S5, S8) comprises a step of shaking said steam nozzle (7) during which the free end (7a) of the steam nozzle (7) is displaced alternatively up and down in the rinsing recipient (12).

6. Method according to any preceding claim, which comprises a second step of frothing (S6) the milk of the second beverage using said steam nozzle (7).

7. Method according to claim 6, wherein said second step of frothing (S6) the milk of the second beverage is followed by a second step of preparing the coffee (S7) of the second beverage.

8. Method according to claim 7, wherein the first rinsing sequence (S2, S5, S8) comprises a first step of emptying (S8) the rinsing recipient (12) triggered electronically by said control unit to be carried out in masked time with the second step of frothing (S6) the milk and/or the second step of preparing (S7) coffee of the second beverage.

9. Method according to claim 8, which comprises a second rinsing sequence (S9, S10, S11) of said steam nozzle (7) following the first step of emptying (S8) said recipient (12), said second rinsing sequence (S9, S10, S11) comprising:
- a second step of filling (S9) the recipient (12) with rinsing liquid using said steam nozzle (7), and
- a second step of soaking (S10) said steam nozzle (7) into the rinsing liquid.

10. Method according to claim 9, wherein the second rinsing sequence (S9, S10, S11) comprises a second step of emptying (S11) following the second step of soaking (S10).

11. Method according to any preceding claim, which comprises the prior actuating (S0) on a user interface (4) of said coffee machine (1) of an dedicated activation button (4a) for the successive preparation of a first and of a second beverage each comprising a coffee and a frothy milk.

12. Coffee machine (1) for the successive preparation of a first and of a second hot beverage each comprising at least one coffee and one frothy milk, said coffee machine (1) including:
a) a mobile steam nozzle (7) having a free end (7a);
b) a rinsing recipient (12) filled at least partially with a rinsing liquid and having an upper opening able to receive the free end (7a) of said steam nozzle (7);
c) means of displacement (13) configured to vertically displace said steam nozzle (7) so that the free end (7a) penetrates through said upper opening into the rinsing recipient (12);
d) means of preparation configured to prepare at least one coffee, and
e) an electronic control unit implementing an management algorithm configured to control at least said means of displacement (13) and said means of preparing in such a way as to electronically trigger:
- following the frothing of the milk of the first beverage using said steam nozzle (7), a first rinsing sequence having a first soaking during which the free end (7a) of said steam nozzle (7) penetrates into said rinsing recipient (12) through said upper opening in order to plunge said steam nozzle (7) into the rinsing liquid; and
- a preparation of the coffee of the first beverage,
said management algorithm being configured so that said preparation of said coffee is carried out in masked time with the first soaking of said steam nozzle (7).
